# FASCICULE DE BREVET EUROPEEN

(11) **EP 1 343 401 B1**
(45) Date de publication et mention de la délivrance du brevet: **29.08.2007**
(21) Numéro de dépôt: 01272051.2
(22) Date de dépôt: 23.11.2001
(51) Int. Cl.: A47J 27/17, A47J 27/04

(54) **USTENSILE POUR LA CUISSON LENTE A LA VAPEUR**
GERÄT ZUM LANGSAMEN DAMPFKOCHEN
UTENSIL FOR SLOW-COOK CYCLE STEAMING

(30) Priorité: 22.12.2000 FR 0016982; 06.11.2001 FR 0114345
(43) Date de publication de la demande: 17.09.2003
(73) Titulaire: SEB S.A., 69130 Ecully (FR)
(72) Inventeur: ROSSI, Fabrice, F-21610 Fontaine Française (FR)
(74) Mandataire: Kiehl, Hubert
(86) Numéro de dépôt international: PCT/FR2001/003708
(87) Numéro de publication internationale: WO 2002/051289

(56) Documents cités:
- DE-A- 3 340 684
- FR-A- 670 237
- US-A- 3 746 205
- US-A- 4 574 776
- US-A- 5 119 800

## Description

La présente invention se rapporte au domaine technique général des appareils ou ustensiles de cuisson à la vapeur et concerne plus particulièrement les appareils ou ustensiles prévus pour la cuisson lente.

Un appareil de cuisson à la vapeur comporte une base chauffante prévue pour la production de vapeur, surmontée d'un récipient de cuisson, voire de plusieurs récipients de cuisson superposés. Un couvercle peut fermer l'ouverture du récipient de cuisson supérieur. Un récipient récupérateur de jus et/ou de condensats peut être disposé entre la base et le récipient de cuisson immédiatement supérieur, ou entre deux récipients de cuisson. Un ustensile de cuisson à la vapeur comporte un récipient de cuisson fermé le cas échéant par un couvercle, ce récipient pouvant être disposé sur un autre récipient de cuisson, sur un récipient récupérateur de jus et/ou de condensats, ou sur une base prévue pour la production de vapeur.

La cuisson lente ou mijotage s'effectue à une température inférieure à 100°C mais peut durer plusieurs heures. La vapeur peut donc être utilisée pour réaliser cette cuisson. Toutefois le récipient de cuisson adapté à une telle cuisson lente présente des parois latérales et de fond dépourvues d'ouverture. Dans un tel récipient les calories sont transmises aux aliments par l'intermédiaire des parois, alors que dans le cas de la cuisson vapeur classique utilisant des récipients à fond perforé les calories sont transmises directement par la vapeur traversant le fond perforé. Un couvercle permet de protéger les aliments de la vapeur.

Le document US 4 574 776 décrit un ustensile de cuisson à la vapeur comportant un récipient de cuisson disposé à l'intérieur d'une enceinte chauffée à la vapeur, ce récipient étant fermé par un couvercle. L'enceinte se présente sous la forme d'une paroi tubulaire posée sur une base de production de vapeur et fermée en sa partie supérieure par un autre couvercle. Un inconvénient de cette réalisation est que de la vapeur peut se condenser sur le couvercle du récipient de cuisson, ce qui oblige à prendre des précautions pour accéder aux aliments cuits dans le récipient de cuisson.

Le document DE 33 40 684 divulgue un ustensile pour la réalisation de cuissons lentes selon le préambule de la revendication 1 ou de la revendication 15.

L'objet de la présente invention est de proposer un ustensile permettant de réaliser des cuissons lentes dans un récipient fermé, susceptible d'être manipulé par l'utilisateur sans gêne particulière.

Un autre objet de la présente invention est de proposer un ustensile permettant de réaliser des cuissons lentes dans un récipient fermé, dans lequel la retombée des condensats dans le récipient est particulièrement limitée.

Un autre objet de la présente invention est de proposer un ustensile permettant de réaliser des cuissons lentes dans un récipient fermé utilisé avec un couvercle adapté à la cuisson à la vapeur.

Ces objets sont atteints avec un ustensile pour la réalisation de cuisson lentes selon les caractéristiques de la revendication 1 ou de la revendication 15.

Le couvercle disposé sur la paroi annulaire du cuiseur vapeur permet de réaliser des cuissons à la vapeur. La vapeur excédentaire s'échappe alors par le ou les évents du couvercle. Lorsque le couvercle est utilisé avec le récipient de cuisson pour réaliser une cuisson à l'étouffée, ou cuisson lente, les aliments disposés dans l'enceinte de cuisson sont Isolés de la vapeur sans utiliser de couvercle additionnel. Cette disposition permet de simplifier et de faciliter la manipulation de l'ustensile de cuisson, du fait qu'un seul couvercle est nécessaire.

Avantageusement au moins un passage est ménagé dans la paroi annulaire. Ce passage permet d'évacuer les excès de vapeur. L'ouverture est de préférence réduite pour éviter de trop grandes déperditions de vapeur.

Plus avantageusement, au moins un passage est ménagé entre la paroi annulaire et le récipient de cuisson. Ce passage permet également d'évacuer les excès de vapeur, mais une telle disposition permet de plus d'éviter les jets de vapeur vers l'extérieur. De manière préférée, le passage présente alors une ouverture dirigée vers la face inférieure du couvercle. L'ouverture est de préférence réduite pour éviter de trop grandes déperditions de vapeur.

Avantageusement alors le couvercle ferme la paroi annulaire. Cette disposition permet de diriger la vapeur vers les évents du couvercle. Les risques de brûlure par la vapeur sont ainsi réduits.

Avantageusement encore, plusieurs passages sont ménagés autour du récipient de cuisson. Cette disposition permet de répartir la vapeur autour du récipient de cuisson et ainsi d'assurer une chauffe plus homogène.

Selon un premier type de réalisation, le récipient de cuisson est prolongé par une collerette pleine comportant une zone annulaire formant avec une zone annulaire du couvercle des moyens de rétention d'un joint liquide annulaire. Cette disposition permet d'utiliser la condensation de la vapeur sur la face intérieure du couvercle pour obtenir un joint liquide entre le couvercle et le récipient. Le ou les évents sont disposés en périphérie de ladite zone annulaire du couvercle. Ainsi le récipient et le couvercle peuvent former une enceinte de cuisson étanche.

Avantageusement alors, le récipient de cuisson comporte un fond plein et des parois latérales s'étendant jusqu'à un bord supérieur prolongé par la collerette pleine. Ainsi, lors du retrait du couvercle, le liquide ayant formé le joint s'écoule à l'extérieur du récipient de cuisson.

Avantageusement alors, le bord supérieur est relié à la paroi annulaire. De ce fait, la collerette pleine est agencée entre le bord supérieur et le ou les passages. Cette disposition facilite la réalisation du récipient de cuisson.

Avantageusement, le couvercle présente à l'intérieur de la zone annulaire une face inférieure centrale ayant des parois inclinées vers le haut à partir de la zone annulaire. Cette disposition facilite l'écoulement des condensats formés sur la face inférieure centrale vers la zone de formation du joint liquide.

Avantageusement alors la face inférieure centrale est concave. Cette disposition permet d'éviter la retombée des condensats dans le récipient de cuisson.

Avantageusement, le ou les passages sont ménagés en un ou plusieurs points bas entre la collerette pleine et la paroi annulaire. Cette disposition permet de faciliter le recyclage des condensats formés sur la face inférieure périphérique du couvercle.

Selon un mode de réalisation, la zone annulaire du couvercle présente une distance inférieure à 1,5 mm avec la zone annulaire de la collerette pleine. La distance réduite entre les deux zones annulaires permet la formation et la rétention du joint liquide entre le couvercle et le récipient, en utilisant les effets des tensions de surface.

Avantageusement alors, la collerette pleine présente des sections inclinées vers le bas en direction du ou de l'un des passages. Cette disposition permet d'évacuer l'eau du joint liquide hors du récipient lors du retrait du couvercle.

Avantageusement encore le couvercle présente une face intérieure concave. Cette disposition permet d'éviter la retombée de condensats dans le récipient lorsque le couvercle est soulevé de la paroi annulaire.

Avantageusement encore, pour favoriser la formation du joint liquide, la zone annulaire présente une section radiale ayant un centre de courbure disposé sous ladite zone annulaire et un rayon de courbure supérieur à 5 mm.

Selon un autre mode de réalisation, le couvercle comporte une nervure annulaire insérée dans une gorge annulaire appartenant à la collerette, la zone annulaire du couvercle étant ménagée sur la nervure annulaire, la gorge annulaire formant la zone annulaire de la collerette. Cette disposition permet d'obtenir un joint liquide dans la gorge annulaire.

Avantageusement, le bord périphérique extérieur de la gorge annulaire comporte au moins un point plus bas que le bord périphérique intérieur de la gorge annulaire. Cette disposition permet d'éviter que le joint liquide se déverse en partie dans le récipient si le niveau du joint liquide monte.

Avantageusement encore, le bord périphérique intérieur de la gorge annulaire correspond au bord supérieur du récipient. Cette disposition permet de réduire la largeur de la collerette.

Avantageusement encore, la collerette pleine présente des sections inclinées vers le bas en direction du ou de l'un des passages à partir du ou de l'un des points bas du bord périphérique extérieur de la gorge annulaire. Cette disposition permet d'évacuer l'eau du joint liquide hors du récipient lors du retrait du couvercle.

Selon un second type de réalisation, le couvercle présente un organe annulaire faisant moyen d'étanchéité avec une collerette pleine prolongeant le récipient de cuisson. Cette disposition permet également d'obtenir une enceinte de cuisson étanche.

Avantageusement alors, l'organe annulaire est un joint annulaire. Cette disposition permet d'obtenir une très bonne étanchéité. En alternative ou en complément, un joint annulaire peut être prévu sur la collerette ou dans le récipient. D'autres moyens d'étanchéité tels que des parois souples peuvent aussi être envisagés.

Avantageusement encore, le récipient de cuisson comporte un fond plein et des parois latérales s'étendant jusqu'à un bord supérieur prolongé par la collerette pleine. Cette disposition permet d'éviter la retombée des condensats dans le récipient de cuisson lors du retrait du couvercle.

Le récipient de cuisson peut être solidaire de la paroi annulaire, pour faciliter la manipulation de l'ustensile.

L'invention sera mieux comprise à l'étude de trois exemples de réalisation et d'une variante, pris à titre nullement limitatif, illustrés dans les figures annexées dans lesquelles :
- la figure 1 est une section verticale d'un cuiseur vapeur lent électrique présentant un ustensile de cuisson selon l'invention,
- la figure 2 est une section verticale partielle d'une variante de l'exemple de réalisation montré à la figure 1,
- la figure 3 est une section verticale partielle d'un deuxième exemple de réalisation d'un ustensile de cuisson selon l'invention,
- la figure 4 est une section verticale partielle d'un troisième exemple de réalisation d'un ustensile de cuisson selon l'invention.

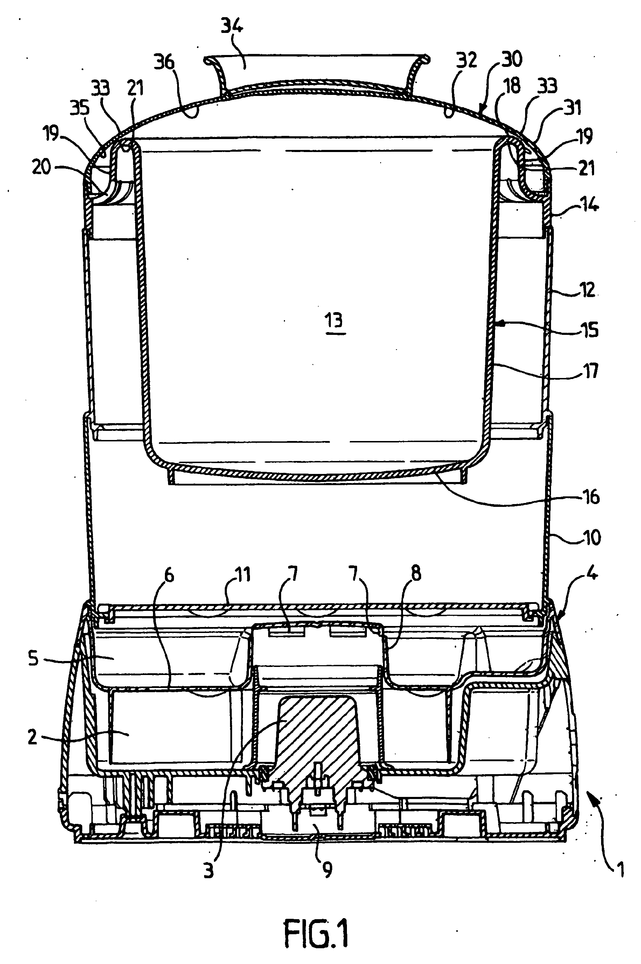

La figure 1 montre un cuiseur vapeur électrique comprenant une base 1, prévue pour la production de vapeur, comportant un réservoir d'eau 2 et un élément chauffant 3 associé à un dispositif de pilotage électronique 9 permettant un fonctionnement à pleine puissance pendant une phase initiale de montée en température et un fonctionnement à puissance réduite pendant la phase de cuisson. La puissance réduite peut être fournie en continu ou par alternance de périodes de chauffe et de périodes d'arrêt.

La base 1 est surmontée d'un élément 4 formant un réservoir de récupération 5 pour la collecte des condensats ou des jus de cuisson, dans le fond duquel est ménagée une ouverture 6 prévue pour le retour des condensats dans le réservoir 2. Un ou plusieurs orifices 7 de passage de la vapeur sont ménagés dans une paroi 8 s'élevant au dessus du fond du réservoir 5. Sur l'élément 4 sont empilés un ou plusieurs récipients de cuisson fermés par un couvercle 30.

Un premier récipient de cuisson est formé par une paroi annulaire 10 associée à un fond perforé 11 amovible. Ce premier récipient de cuisson permet la cuisson des aliments par un contact direct avec la vapeur. La paroi annulaire 10 est surmontée d'une autre paroi annulaire 12, de préférence interchangeable avec la paroi 10, mais pas nécessairement identique. La paroi annulaire 12 est surmontée par une paroi annulaire 14 associée à un deuxième récipient de cuisson 15, prévu pour la cuisson lente des aliments. Le récipient de cuisson 15 est entouré par la paroi annulaire 14, tel que bien visible sur la figure 1. Le couvercle 30 est disposé sur la paroi annulaire 14 et ferme ladite paroi.

Toutefois, tel que visible à la figure 1, le couvercle peut également être disposé sur la paroi annulaire 12 ou sur la paroi annulaire 10. L'utilisateur peut alors réaliser une cuisson à la vapeur sur le fond perforé 11.

Le récipient 15 est formé par un fond 16 relié à des parois latérales 17 s'étendant jusqu'à un bord supérieur 18 prolongé par une collerette pleine 19 inclinée vers le bas. Un ou plusieurs passages 20 sont ménagés entre la collerette 19 et la paroi annulaire 14 pour permettre à la vapeur de s'échapper par un évent 31 du couvercle 30. L'inclinaison de la collerette 19 en direction du ou des passages 20 permet également le retour des condensats dans le réservoir 5. De préférence, le ou les passages 20 sont ménagés en un ou plusieurs points bas entre la collerette 19 et la paroi annulaire 14. Le récipient 15 est solidaire de la paroi 14. De préférence, plusieurs passages 20 sont ménagés autour du récipient 15.

Le couvercle 30 présente une face intérieure 32 concave. De ce fait la face intérieure 32 est concave à l'intérieur comme à l'extérieur d'une zone annulaire 33 présentant une distance minimale avec une zone annulaire 21 de la collerette pleine 19. Ainsi le couvercle 30 présente à l'intérieur de la zone annulaire 33 une face inférieure centrale 36 ayant des parois inclinées vers le haut à partir de la zone annulaire 33, et à l'extérieur de la zone annulaire 33 une face inférieure périphérique 35 ayant des parois inclinées vers le bas à partir de la zone annulaire 33. La distance minimale entre les deux zones annulaires 21, 33 est inférieure à 1,5 mm, et est de l'ordre de 1 mm dans l'exemple de réalisation montré à la figure 1. Le couvercle 30 présente un organe de préhension 34. La zone annulaire 21 est formée par une paroi dont la section radiale présente une courbure dont le centre est disposé sous la zone annulaire 21 et dont le rayon est supérieur à 5 mm. Dans l'exemple de réalisation montré à la figure 1 le rayon est de l'ordre de 1 cm et correspond au rayon du bord supérieur 18.

La paroi annulaire 14 de support et le récipient 15 forment avec le couvercle 30 un ustensile de cuisson lente prévu pour être chauffé à la vapeur.

L'appareil comportant l'ustensile de cuisson lente précité fonctionne de la manière suivante.

L'utilisateur remplit d'eau le réservoir 2, dispose les aliments à cuire dans le récipient 15, met en place le couvercle 30 et met en marche l'appareil. Lors de la phase initiale de montée en température la vapeur s'élève par les orifices 7 en direction des passages 20 pour chauffer le fond 16 et les parois latérales 17 du récipient 15, et s'échappe finalement par les évents 31. L'élévation de la température dans le récipient 15 provoque la formation de vapeur qui vient condenser sur la face intérieure 32 du couvercle 30. Une partie de la vapeur ayant traversé les passages 20 peut également se condenser sur la face intérieure 32 du couvercle 30. Grâce à l'inclinaison de la face 32 les condensats forment des gouttes s'écoulant vers la périphérie du couvercle 30. Les gouttes sont arrêtées au niveau de la zone annulaire 33 du couvercle 30 par le contact avec la zone annulaire 21 de la collerette 19 du récipient 15 et forment un joint liquide annulaire. La zone annulaire 33 du couvercle forme avec la zone annulaire 21 de la collerette 19 des moyens de rétention d'un joint liquide annulaire. Le récipient 15 est ainsi isolé de la vapeur issue de la base 1.

De ce fait, le récipient 15 et le couvercle 30 forment pendant la cuisson une enceinte de cuisson 13 fermée. Les évents 31 sont disposés en périphérie du couvercle 30 par rapport à la zone annulaire 33, tel que montré à la figure 1. Les évents sont disposés en dehors de l'enceinte de cuisson 13. La cuisson à une température inférieure à 100°C peut être poursuivie grâce à la puissance réduite de l'élément chauffant 3. La condensation sur la partie périphérique interne 35 du couvercle peut s'écouler sur les parois annulaires 14, 12, 10 pour rejoindre le réservoir de récupération 5 pour un écoulement par l'ouverture 6 jusqu'au réservoir d'eau 2, ce qui permet d'augmenter l'autonomie de l'appareil. La condensation sur la face extérieure du récipient 15 peut également retomber dans réservoir de récupération 5 pour s'écouler jusqu'au réservoir d'eau 2.

Lors du retrait du couvercle 30, les condensats liquides peuvent s'écouler jusqu'à la périphérie du couvercle 30 grâce à la forme bombée de la paroi intérieure 32, et jusqu'aux passages 20, du fait que la collerette 19 présente des sections inclinées vers le bas en direction de l'extérieur du récipient 15 entre la zone annulaire 21 et les passages 20. La retombée de condensats dans le récipient 15 est ainsi évitée.

Le deuxième récipient de cuisson et le couvercle peuvent être réalisés en tous matériaux alimentaires adaptés aux températures rencontrées lors de la cuisson vapeur, et notamment en polycarbonate, en verre ou en acier inoxydable.

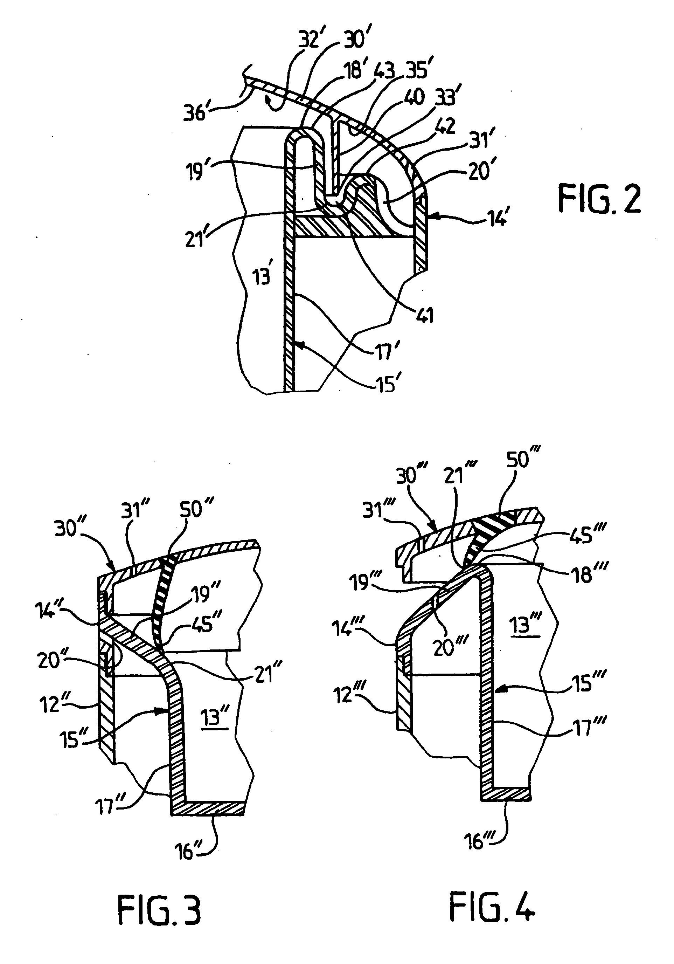

La variante présentée à la figure 2 diffère de l'exemple de réalisation précédent en ce que la collerette 19' présente autour du bord supérieur 18' du récipient 15' une gorge annulaire 41 et en ce que le couvercle 30' présente une nervure annulaire 40. La gorge 41 et la nervure 40 forment les zones annulaires 21', 33' permettant la rétention d'un joint liquide.

On remarquera que la gorge 41 présente un bord périphérique intérieur 43 plus haut que le bord périphérique extérieur 42, ce qui évite un déversement dans le récipient du liquide contenu dans la gorge. A titre de variante le bord périphérique extérieur 42 peut présenter au moins un point bas moins haut que le bord périphérique intérieur 43.

Le bord périphérique extérieur de la gorge 41 correspond au bord supérieur 18' du récipient 15'. Le ou les passages 20' sont ménagés entre le bord périphérique extérieur 42 de la gorge 41 et la paroi annulaire 14'. La nervure 40 sépare la paroi intérieure centrale 36' de la paroi intérieure périphérique 35' du couvercle 30'. Un évent 31' est ménagé dans la paroi intérieure périphérique 35' du couvercle 30'.

Un deuxième exemple de réalisation est illustré à la figure 3. Le couvercle 30" ferme la paroi annulaire 14" entourant le récipient 15" présentant un fond 16" et une paroi latérale 17". La paroi annulaire 14" repose sur une paroi annulaire 12". La paroi annulaire 14" peut être retirée, le couvercle 30" repose alors sur la paroi 12". Le récipient de cuisson 15" est prolongé par une collerette pleine 19" jusqu'à la paroi 14". Un passage 20" traverse la paroi 14" sous la collerette 19" pour permettre l'évacuation de la vapeur en excès.

Un joint annulaire 50" est monté dans le couvercle 30". Le joint 50" peut par exemple être surmoulé dans le couvercle 30". Le joint 50" prend appui sur une zone annulaire 21" de la collerette 19". Le joint 50" forme ainsi un organe annulaire 45" faisant moyen d'étanchéité avec la collerette pleine 19". Le couvercle 30" et le récipient de cuisson 15" forment ainsi une enceinte de cuisson 13" fermée dès que le couvercle 30" est posé sur la paroi 14". Les évents 31" sont disposés sur la partie périphérique du couvercle 30" à l'extérieur du joint 50" et ne mettent pas en communication l'enceinte 13" avec l'extérieur.

Un troisième exemple de réalisation est illustré à la figure 4. Un joint annulaire 50"' est monté dans le couvercle 30"'. Le joint 50"' forme un organe annulaire 45"' faisant moyen d'étanchéité avec la collerette pleine 19"'. La paroi annulaire 14"' entoure et supporte le récipient 15 "' présentant un fond 16"' et une paroi latérale 17"'. Le joint 50"' prend appui à l'extérieur du bord supérieur 18"' du récipient 15"' sur une zone annulaire 21"' de la collerette 19"'. Le couvercle 30"' et le récipient de cuisson 15"' forment ainsi une enceinte de cuisson 13"' fermée. Le couvercle 30"' ne prend pas appui sur la paroi annulaire 14"' mais est prévu pour reposer sur la paroi annulaire 12"' lorsque la paroi 14"' est retirée. La collerette pleine 19"' est prolongée jusqu'à la paroi annulaire 14"'. Des passages 20"' sont ménagés autour du récipient 15"' entre la collerette 19"' et la paroi 14"'. Les évents 31"' sont disposés sur la partie périphérique du couvercle 30"' à l'extérieur du joint 50"'. Les évents 31"' n'ont aucune fonction lorsque le couvercle 30"' ferme le récipient 15"', mais permettent d'évacuer la vapeur en excès lorsque le couvercle 30"' repose sur la paroi 12"'.

A titre de variante complémentaire, les parois annulaires 10, 12 ; 12"; 12'" peuvent comporter deux conformations annulaires prévues pour recevoir respectivement la paroi annulaire 14 ; 14' ; 14" ; 14"' d'une part et le couvercle 30 ; 30' ; 30" ; 30"' d'autre part.

A titre de variante complémentaire, le récipient peut être amovible par rapport à la paroi annulaire, ou par rapport aux passages, voire par rapport à la zone annulaire.

A titre de variante également, l'organe de préhension du couvercle peut être remplacé par des poignées.

L'ustensile de cuisson lente formé par la paroi annulaire de support, le récipient et le couvercle peut également être associé à une base de production de vapeur dépourvue d'élément chauffant électrique. La base de production de vapeur est alors disposée sur un foyer de chauffe.

Un cuiseur vapeur comportant un ustensile de cuisson lente selon la présente invention comporte ainsi un nombre réduit d'éléments, puisque le même couvercle peut être utilisé pour la cuisson lente et pour la cuisson à la vapeur.

La présente invention n'est nullement limitée aux exemples de réalisation décrits et à leurs variantes, mais englobe de nombreuses modifications dans le cadre des revendications.

## Revendications

1. Ustensile pour la réalisation de cuisson lentes, comprenant une paroi annulaire (14; 14') entourant un récipient de cuisson (15 ; 15'), et un couvercle (30 ; 30'), la paroi annulaire (14 ; 14') et le couvercle (30 ; 30') étant prévus pour être disposés sur une autre paroi annulaire (12) appartenant à un cuiseur vapeur, le couvercle (30 ; 30') formant avec le récipient de cuisson (15 ; 15') une enceinte de cuisson (13 ; 13') étanche, le couvercle (30 ; 30') comportant au moins un évent (31 ; 31') disposé en dehors de l'enceinte de cuisson (13 ; 13'), **caractérisé en ce que** la paroi annulaire (14 ; 14') repose sur l'autre paroi annulaire (12), le récipient de cuisson (15 ; 15') étant prolongé au-delà d'un bord supérieur (18 ; 18') par une collerette pleine (19 ; 19') comportant une zone annulaire (21 ; 21') formant avec une zone annulaire (33 ; 33') du couvercle (30 ; 30') des moyens de rétention d'un joint liquide annulaire, le couvercle (30 ; 30') étant prévu pour reposer sur l'autre paroi annulaire (12) lorsque la paroi annulaire (14 ; 14') est retirée.

2. Ustensile selon la revendication 1, **caractérisé en ce que** le couvercle (30; 30') présente à l'intérieur de la zone annulaire (33 ; 33') une face inférieure centrale (36 ; 36') ayant des parois inclinées vers le haut à partir de la zone annulaire (33 ; 33').

3. Ustensile selon la revendication 2 **caractérisé en ce que** la face inférieure centrale (36 ; 36') est concave.

4. Ustensile selon l'une des revendications 1 à 3, **caractérisé en ce que** la zone annulaire (33) du couvercle (30) présente une distance inférieure à 1,5 mm avec la zone annulaire (21) de la collerette pleine (19).

5. Ustensile selon l'une des revendications 1 à 4, **caractérisé en ce que** la zone annulaire (21) présente une section radiale ayant un centre de courbure disposé sous ladite zone annulaire et un rayon de courbure supérieur à 5 mm.

6. Ustensile selon l'une des revendications 1 à 5, **caractérisé en ce que** le couvercle (30') comporte une nervure annulaire (40) insérée dans une gorge annulaire (41) appartenant à la collerette (19'), la zone annulaire (33') du couvercle (30') étant ménagée sur la nervure annulaire (40), la gorge annulaire (41) formant la zone annulaire (21') de la collerette (19').

7. Ustensile selon la revendication 6, **caractérisé en ce que** le bord périphérique extérieur de ta gorge annulaire (41) comporte au moins un point plus bas que le bord périphérique intérieur de la gorge annulaire (41).

8. Ustensile selon l'une des revendications 6 ou 7, **caractérisé en ce que** le bord périphérique intérieur de la gorge annulaire (41) correspond à un bord supérieur (18') du récipient (15').

9. Ustensile selon l'une des revendications 6 à 8, **caractérisé en ce que** la collerette pleine (19') présente des sections inclinées vers le bas en direction d'un passage (20') ménagé entre la paroi annulaire (14') et le récipient de cuisson (15'), à partir du ou de l'un des points bas du bord périphérique extérieur de la gorge annulaire (41).

10. Ustensile selon l'une des revendications 1 à 5, **caractérisé en ce que** la collerette pleine (19) présente des sections inclinées vers le bas en direction d'un passage (20) ménagé entre la paroi annulaire (14) et le récipient de cuisson (15).

11. Ustensile selon l'une des revendications 1 à 10, **caractérisé en ce qu'**au moins un passage (20 ; 20') est ménagé entre la paroi annulaire (14 ; 14') et le récipient de cuisson (15 ; 15').

12. Ustensile selon la revendication 11, **caractérisé en ce que** le ou les passages (20 ; 20') sont ménagés en un ou plusieurs points bas entre la collerette pleine (19 ; 19') et la paroi annulaire (14 ; 14').

13. Ustensile selon l'une des revendications 1 à 12, **caractérisé en ce que** le récipient de cuisson comporte un fond plein (16) et des parois latérales (17 ; 17') s'étendant jusqu'au bord supérieur (18 ; 18').

14. Ustensile selon l'une des revendications 1 à 13, **caractérisé en ce que** le bord supérieur (18 ; 18') est relié à la paroi annulaire (14 ; 14').

15. Ustensile pour la réalisation de cuisson lentes, comprenant une paroi annulaire (14" ; 14"') entourant un récipient de cuisson (15" ; 15"'), et un couvercle (30" ; 30"'), la paroi annulaire (14" ; 14"') et le couvercle (30" ; 30"') étant prévus pour être disposés sur une autre paroi annulaire (12" ; 12"') appartenant à un cuiseur vapeur, le couvercle (30" ; 30'") formant avec le récipient de cuisson (15" ; 15"') une enceinte de cuisson (13" ; 13"') étanche, le couvercle (30"; 30"') comportant au moins un évent (31" ; 31"') disposé en dehors de l'enceinte de cuisson (13" ; 13"'), le couvercle (30" ; 30"') comportant un organe annulaire (45" ; 45"'), **caractérisé en ce que** la paroi annulaire (14" ; 14"') repose sur l'autre paroi annulaire (12" ; 12"'), l'organe annulaire (45" ; 45"') étant un joint annulaire (50" ; 50"') faisant moyen d'étanchéité avec une collerette pleine (19", 19"') inclinée prolongeant le récipient de cuisson (15" ; 15"'), le couvercle (30" ; 30"') étant prévu pour reposer sur l'autre paroi annulaire (12" ; 12"') lorsque la paroi annulaire (14" ; 14"') est retirée.

16. Ustensile selon la revendication 15, **caractérisé en ce que** le récipient de cuisson (15"') comporte un fond plein (16'") et des parois latérales (17"') s'étendant jusqu'à un bord supérieur (18"') prolongé par la collerette pleine (19'").

17. Ustensile selon la revendication 16, **caractérisé en ce que** le joint (50"') prend appui sur la collerette pleine (19"') à l'extérieur du bord supérieur (18"').

18. Ustensile selon l'une des revendications 15 à 17, **caractérisé en ce qu'**au moins un passage (20") est ménagé dans la paroi annulaire (14").

19. Ustensile selon l'une des revendications 15 à 18, **caractérisé en ce qu'**au moins un passage (20"') est ménagé entre la paroi annulaire (14"') et le récipient de cuisson (15"').

20. Ustensile selon l'une des revendications 9, 10, 11, 12, 18 ou 19, **caractérisé en ce que** plusieurs passages (20 ; 20' ; 20" ; 20"') sont ménagés autour du récipient de cuisson (15 ; 15' ; 15" ; 15"').

21. Ustensile selon l'une des revendications 1 à 20, **caractérisé en ce que** le couvercle (30) présente une face intérieure (32) concave.

22. Ustensile selon l'une des revendications 1 à 21, **caractérisé en ce que** le récipient (15 ; 15' ; 15" ; 15"') est solidaire de la paroi annulaire (14; 14' : 14"; 14"').

23. Ustensile selon l'une des revendications 1 à 22, **caractérisé en ce que** le couvercle (30 ; 30' ; 30") ferme la paroi annulaire (14; 14' ; 14").

24. Ustensile selon l'une des revendications 1 à 23, **caractérisé en ce que** le couvercle (30; 30'; 30") repose sur la paroi annulaire (14; 14'; 14").

## Claims

1. Utensil for carrying out slow cooking, comprising an annular wall (14; 14') surrounding a cooking receptacle (15; 15'), and a lid (30; 30'), the annular wall (14; 14') and the lid (30; 30') being provided for being disposed on another annular wall (12) belonging to a steam cooking pot, the lid (30; 30') forming with the cooking receptacle (15; 15') a sealed cooking chamber (13; 13'), the lid (30; 30') having at least one vent (31; 31') disposed outside the cooking chamber (13; 13'), **characterised in that** the annular wall (14; 14') rests on the other annular wall (12), the cooking receptacle (15; 15') being extended beyond a top edge (18; 18') by a solid collar (19; 19') comprising an annular zone (21; 21') forming, with an annular zone (33; 33') of the lid (30; 30'), means of retaining an annular liquid seal, the lid (30; 30') being designed to rest on the other annular wall (12) when the annular wall (14; 14') is removed.

2. Utensil according to Claim 1, **characterised in that** the lid (30; 30') has, inside the annular zone (33; 33'), a central bottom face (36; 36') having walls inclined upwards from the annular zone (33; 33').

3. Utensil according to Claim 2, **characterised in that** the central bottom face (36; 36') is concave.

4. Utensil according to one of Claims 1 to 3, **characterised in that** the annular zone (33) of the cover (30) has a spacing of less than 1.5 mm from the annular zone (21) of the solid collar (19).

5. Utensil according to one of Claims 1 to 4, **characterised in that** the annular zone (21) has a radial section having a centre of curvature disposed under the said annular zone and a radius of curvature greater than 5 mm.

6. Utensil according to one of Claims 1 to 5, **characterised in that** the lid (30') has an annular rib (40) inserted in an annular groove (41) belonging to the collar (19'), the annular zone (33') of the lid (30') being provided on the annular rib (40), the annular groove (41) forming the annular zone (21') of the collar (19').

7. Utensil according to Claim 6, **characterised in that** the external peripheral edge of the annular groove (41) has at least one point lower than the internal peripheral edge of the annular groove (41).

8. Utensil according to one of Claims 6 or 7, **characterised in that** the internal peripheral edge of the annular groove (41) corresponds to the top edge (18') of the receptacle (15').

9. Utensil according to one of claims 6 to 8, **characterised in that** the solid collar (19') has sections inclined downwards in the direction of a passage (20') provided between the annular wall (14') and the cooking receptacle (15'), from the or one of the low points of the external peripheral edge of the annular groove (41).

10. Utensil according to one of claims 1 to 5, **characterised in that** the solid collar (19) has sections inclined downwards in the direction of a passage (20) provided between the annular wall (14) and the cooking receptacle (15).

11. Utensil according to one of claims 1 to 10, **characterised in that** at least one passage (20; 20') is provided between the annular wall (14; 14') and the cooking receptacle (15; 15').

12. Utensil according to Claim 11, **characterised in that** the passage or passages (20; 20') are provided at one or more low points between the solid collar (19; 19') and the annular wall (14; 14').

13. Utensil according to one of claims 1 to 12, **characterised in that** the cooking receptacle has a solid bottom (16) and lateral walls (17; 17') extending as far as the top edge (18; 18').

14. Utensil according to one of Claims 1 to 13, **characterised in that** the top edge (18; 18') is connected to the annular wall (14; 14').

15. Utensil for carrying out slow cooking, comprising an annular wall (14"; 14"') surrounding a cooking receptacle (15"; 15"'), and a lid (30"; 30"'), the annular wall (14"; 14"') and the lid (30"; 30"') being provided for being disposed on another annular wall (12"; 12"') belonging to a steam cooking pot, the lid (30"; 30"') forming with the cooking receptacle (15"; 15"') a sealed cooking chamber (13"; 13"'), the lid (30" ; 30"') having at least one vent (31"; 31"') disposed outside the cooking chamber (13"; 13"'), the lid (30" ; 30"') comprising an annular member (45"; 45"'), **characterised in that** the annular wall (14"; 14"') rests on the other annular wall (12"; 12"'), the annular member (45"; 45"') being an annular seal (50"; 50"') forming a sealing means with an inclined solid collar (19"; 19"') extending the cooking receptacle (15"; 15"'), the lid (30" ; 30"') being designed to rest on the other annular wall (12"; 12"') when the annular wall (14"; 14"') is removed.

16. Utensil according to Claim 15, **characterised in that** the cooking receptacle (15"') has a solid bottom (16"') and side walls (17"') extending as far as a top edge (18"') extended by the solid collar (19"').

17. Utensil according to claim 16, **characterised in that** the seal (50"') bears on the solid collar (19"') outside the top edge (18"').

18. Utensil according to one of Claims 15 to 17, **characterised in that** at least one passage (20") is provided in the annular wall (14").

19. Utensil according to one of Claims 15 to 18, **characterised in that** at least one passage (20"') is provided between the annular wall (14"') and the cooking receptacle (15"').

20. Utensil according to one of Claims 9, 10, 11, 12, 18 or 19, **characterised in that** several passages (20; 20'; 20" ; 20"') are provided around the cooking receptacle (15; 15'; 15"; 15"').

21. Utensil according to one of Claims 1 to 20, **characterised in that** the lid (30) has a concave internal face (32).

22. Utensil according to one of Claims 1 to 21, **characterised in that** the receptacle (15; 15'; 15"; 15"') is integral with the annular wall (14; 14'; 14" ; 14"').

23. Utensil according to one of Claims 1 to 22, **characterised in that** the lid (30; 30'; 30") closes the annular wall (14; 14'; 14'').

24. Utensil according to one of Claims 1 to 23, **characterised in that** the lid (30; 30'; 30") rests on the annular wall (14; 14'; 14").

## Patentansprüche

1. Gerät zum langsamen Kochen, mit einer ringförmigen Wand (14; 14'), die einen Kochbehälter (15; 15') umgibt, und einem Deckel (30; 30'), wobei die ringförmige Wand (14; 14') und der Deckel (30; 30') dazu vorgesehen sind, auf einer weiteren, einem Dampfkochtopf gehörenden ringförmigen Wand (12) angeordnet zu sein, wobei der Deckel (30; 30') mit dem Kochbehälter (15; 15') einen dichten Garraum (13; 13') bildet, wobei der Deckel (30; 30') mindestens eine Lüftungsöffnung (31, 31') aufweist, die außerhalb des Garraums (13, 13') angeordnet ist, **dadurch gekennzeichnet, dass** die ringförmige Wand (14; 14') auf der weiteren ringförmigen Wand (12) aufliegt, wobei der Kochbehälter (15; 15') über einen oberen Rand (18; 18') hinaus durch einen massiven Bund (19; 19') verlängert ist, der einen ringförmigen Bereich (21, 21') aufweist, der mit einem ringförmigen Bereich (33, 33') des Deckels (30; 30') Mittel zum Zurückhalten einer ringförmigen flüssigen Dichtung bildet, wobei der Deckel (30; 30') dazu vorgesehen ist, auf der weiteren ringförmigen Wand (12) aufzuliegen, wenn die ringförmige Wand (14; 14') entfernt ist.

2. Gerät nach Anspruch 1, **dadurch gekennzeichnet, dass** der Deckel (30; 30') innerhalb des ringförmigen Bereichs (33; 33') eine mittlere untere Fläche (36; 36') aufweist, deren Wände ausgehend vom ringförmigen Bereich (33; 33') nach oben geneigt sind.

3. Gerät nach Anspruch 2, **dadurch gekennzeichnet, dass** die mittlere untere Fläche (36; 36') konkav ist.

4. Gerät nach einem der Ansprüche 1 bis 3, **dadurch gekennzeichnet, dass** der ringförmige Bereich (33) des Deckels (30) einen unter 1,5 mm liegenden Abstand vom ringförmigen Bereich (21) des massiven Bundes (19) aufweist.

5. Gerät nach einem der Ansprüche 1 bis 4, **dadurch gekennzeichnet, dass** der ringförmige Bereich (21) einen radialen Querschnitt aufweist, dessen Krümmungsmittelpunkt unter dem ringförmigen Bereich angeordnet ist und dessen Krümmungsradius größer als 5 mm ist.

6. Gerät nach einem der Ansprüche 1 bis 5, **dadurch gekennzeichnet, dass** der Deckel (30') eine ringförmige Rippe (40) aufweist, die in einer ringförmigen Nut (41) eingesetzt ist, die dem Bund (19') gehört, wobei der ringförmige Bereich (33') des Deckels an der ringförmigen Rippe (40) ausgebildet ist, und wobei die ringförmige Nut (41) den ringförmigen Bereich (21') des Bunds (19') bildet.

7. Gerät nach Anspruch 6, **dadurch gekennzeichnet, dass** der umlaufende Außenrand der ringförmigen Nut (41) mindestens eine Stelle aufweist, die tiefer liegt als der umlaufende Innenrand der ringförmigen Nut (41).

8. Gerät nach einem der Ansprüche 6 oder 7, **dadurch gekennzeichnet, dass** der umlaufende Innenrand der ringförmigen Nut (41) einem oberen Rand (18') des Behälters (15') entspricht.

9. Gerät nach einem der Ansprüche 6 bis 8, **dadurch gekennzeichnet, dass** der massive Bund (19') Abschnitte aufweist, die nach unten in Richtung eines Durchgangs (20') geneigt sind, der ausgehend von der tief liegenden Stelle oder einer der tief liegenden Stellen des umlaufenden Außenrands der ringförmigen Nut (41) des zwischen der ringförmigen Wand (14') und dem Kochbehälter (15') ausgebildet ist.

10. Gerät nach einem der Ansprüche 1 bis 5, **dadurch gekennzeichnet, dass** der massive Bund (19) Abschnitte aufweist, die nach unten in Richtung eines Durchgangs (20) geneigt sind, der zwischen der ringförmigen Wand (14) und dem Kochbehälter (15) ausgebildet ist.

11. Gerät nach einem der Ansprüche 1 bis 10, **dadurch gekennzeichnet, dass** wenigstens ein Durchgang (20; 20') zwischen der ringförmigen Wand (14; 14') und dem Kochbehälter (15; 15') ausgebildet ist.

12. Gerät nach Anspruch 11, **dadurch gekennzeichnet, dass** der Durchgang oder die Durchgänge (20; 20') an einer oder mehreren tief liegenden Stellen zwischen dem massiven Bund (19; 19') und der ringförmigen Wand (14; 14') ausgebildet sind.

13. Gerät nach einem der Ansprüche 1 bis 12, **dadurch gekennzeichnet, dass** der Kochbehälter einen massiven Boden (16) und Seitenwände (17; 17'), die sich bis zum oberen Rand erstrecken (18; 18'), aufweist.

14. Gerät nach einem der Ansprüche 1 bis 13, **dadurch gekennzeichnet, dass** der obere Rand (18; 18') mit der ringförmigen Wand (14; 14') verbunden ist.

15. Gerät zum langsamen Kochen, mit einer ringförmigen Wand (14"; 14"'), die einen Kochbehälter (15"; 15"') umgibt, und einem Deckel (30"; 30"'), wobei die ringförmige Wand (14"; 14"') und der Deckel (30"; 30"') dazu vorgesehen sind, auf einer weiteren, einem Dampfkochtopf gehörenden ringförmigen Wand (12", 12"') angeordnet zu sein, wobei der Deckel (30"; 30"') mit dem Kochbehälter (15"; 15"') einen dichten Garraum (13"; 13"') bildet, wobei der Deckel (30"; 30"') mindestens eine Lüftungsöffnung (31", 31"') aufweist, die außerhalb des Garraums (13", 13"') angeordnet ist, wobei der Deckel (30", 30"') ein ringförmiges Element (45", 45"') aufweist, **dadurch gekennzeichnet, dass** die ringförmige Wand (14"; 14"') auf der weiteren ringförmigen Wand (12"; 12"') aufliegt, wobei das ringförmige Element (45", 45"') eine Ringdichtung (50"; 50"') ist, die mit einem massiven, geneigten Bund (19"; 19"'), der den Kochbehälter (15"; 15"') verlängert, ein Dichtmittel bildet, wobei der Deckel (30"; 30"') dazu vorgesehen ist, auf der weiteren ringförmigen Wand (12"; 12"') aufzuliegen, wenn die ringförmige Wand (14"; 14"') entfernt ist.

16. Gerät nach Anspruch 15, **dadurch gekennzeichnet, dass** der Kochbehälter (15"') einen massiven Boden (16"') und Seitenwände (17"'), die sich bis zu einem durch den massiven Bund (19"') verlängerten oberen Rand erstrecken (18"'), aufweist.

17. Gerät nach Anspruch 16, **dadurch gekennzeichnet, dass** die Dichtung (50"') sich auf dem massiven Bund (19"') außerhalb des oberen Rands (18"') abstützt.

18. Gerät nach einem der Ansprüche 15 bis 17, **dadurch gekennzeichnet, dass** mindestens ein Durchgang (20") in der ringförmigen Wand (14") ausgebildet ist.

19. Gerät nach einem der Ansprüche 15 bis 18, **dadurch gekennzeichnet, dass** mindestens ein Durchgang (20"') zwischen der ringförmigen Wand (14"') und dem Kochbehälter (15"') ausgebildet ist.

20. Gerät nach einem der Ansprüche 9, 10, 11, 12, 18 oder 19, **dadurch gekennzeichnet, dass** mehrere Durchgänge (20; 20'; 20"; 20"') um den Kochbehälter (15; 15'; 15"; 15"') ausgebildet sind.

21. Gerät nach einem der Ansprüche 1 bis 20, **dadurch gekennzeichnet, dass** der Deckel (30) eine innere konkave Fläche (32) aufweist.

22. Gerät nach einem der Ansprüche 1 bis 21, **dadurch gekennzeichnet, dass** der Behälter (15; 15'; 15"; 15"') mit der ringförmigen Wand (14; 14'; 14"; 14"') fest verbunden ist.

23. Gerät nach einem der Ansprüche 1 bis 22, **dadurch gekennzeichnet, dass** der Deckel (30; 30'; 30") die ringförmige Wand (14; 14' 14") schließt.

24. Gerät nach einem der Ansprüche 1 bis 23, **dadurch gekennzeichnet, dass** der Deckel (30; 30'; 30") auf der ringförmigen Wand (14; 14' 14") aufliegt.
